# EUROPÄISCHE PATENTSCHRIFT

(11) **EP 2 083 654 B1**
(45) Veröffentlichungstag und Bekanntmachung des Hinweises auf die Patenterteilung: **09.03.2011**
(21) Anmeldenummer: 06804829.7
(22) Anmeldetag: 24.10.2006
(51) Int. Cl.: A47B 13/06, F16B 7/18

(54) **GESTELLAUFBAU FÜR EINEN TISCH**
FRAME STRUCTURE FOR A TABLE
MONTAGE DE STRUCTURE D'UNE TABLE

(43) Veröffentlichungstag der Anmeldung: 05.08.2009
(73) Patentinhaber: Vitra Patente AG, 4132 Muttenz (CH)
(72) Erfinder: BRÄUNING, Egon, 79576 Weil am Rhein (DE)
(74) Vertreter: Ullrich, Gerhard
(86) Internationale Anmeldenummer: PCT/CH2006/000595
(87) Internationale Veröffentlichungsnummer: WO 2008/049244

(56) Entgegenhaltungen:
- EP-A1- 0 443 111
- WO-A-99/17634
- WO-A-03/038290
- FR-A- 907 817

## Beschreibung

### Anwendungsgebiet der Erfindung

Die vorliegende Erfindung bezieht sich auf einen Gestellaufbau für einen Tisch mit einer von Füssen getragenen Tischplatte, welche eine Tischplattenoberseite als Arbeitsfläche und eine Tischplattenunterseite aufweist. An der Tischplattenunterseite ist ein Träger befestigt. Unterhalb der Tischplatte ist je Fuss eine Basis mit einer Aufnahmepartie angeordnet, an welcher der jeweils zugehörige Fuss anmontiert ist. Der Gestellaufbau ist erweiterbar, um Tische grosser Dimensionen zu schaffen, deren verschieden konfigurierbare Tischplatte sich aus mehreren Segmenten zusammensetzt.

### Stand der Technik

Gestellaufbauten für Tische bis zur Erstreckung in grosse Dimensionen hinsichtlich Breite und Länge, sind z.B. aus den Patentpublikationen WO 2004/021 829 A1 und WO 2004/021 830 A1 bekannt. Diese Konstruktionen sind jedoch für einen engeren Bereich in der Konfiguration der Tischplatten vorgesehen.

Die Patentpublikationen EP 0 443 111 A1, WO 99/17634 A1 und FR 907 817 A offenbaren einen Gestellaufbau für einen Tisch mit einer von Füssen getragenen Tischplatte, welche eine Tischplattenoberseite als Arbeitsfläche und eine Tischplattenunterseite aufweist. An der Tischplattenunterseite ist ein Träger befestigt. Diese Konstruktionen umfassen ferner eine je Fuss unterhalb der Tischplatte angeordnete Basis mit einer Aufnahmepartie, an welcher der jeweils zugehörige Fuss anmontiert ist. Die Basis besitzt Anschlussmittel zum Verbinden mit mehreren Trägern verschiedener, wahlweiser Abgangsrichtung.

### Aufgabe der Erfindung

In Relation zum vorbekannten Stand der Technik, liegt der Erfindung die Aufgabe zugrunde einen Gestellaufbau für Tische mit grosser Variabilität in der Geometrie der Tischplatte sowie deren Dimensionen vorzuschlagen. Bei sehr grossen Tischen muss eine aus Segmenten zusammengesetzte Tischplatte eine ausreichende Steifigkeit gegen Durchbiegung auch bei hoher Belastung besitzen. Eine weitere Aufgabe besteht darin, den Gestellaufbau so zu konzipieren, dass eine praktikable Montage ermöglicht wird. Schliesslich soll der Gestellaufbau die Herstellung von Tischen in Serie oder in Einzelanfertigung mit individueller Form zu effizienten Kosten ermöglichen.

### Übersicht über die Erfindung

Der Gestellaufbau für einen Tisch beruht auf einer von Füssen getragenen Tischplatte, welche eine Tischplattenoberseite als Arbeitsfläche und eine Tisch-plattenunterseite aufweist, einem an der Tischplattenunterseite befestigten Träger sowie einer je Fuss unterhalb der Tischplatte angeordneten Basis mit einer Aufnahmepartie, an welcher der jeweils zugehörige Fuss anmontiert ist. Die Basis besitzt Anschlussmittel zum Verbinden mit mehreren Trägern verschiedener, wahlweiser Abgangsrichtung. Die Anschlussmittel an der Basis sind ausser zum Verbinden mit zumindest einem Träger gleichzeitig zum Verbinden mit zumindest einer Konsole im zum Träger verschiedener Abgangsrichtung nutzbar. Die Konsole lässt sich andererseits an der Tischplattenunterseite fixieren. Insoweit unbelegte Anschlussmittel an der Basis sind zur Befestigung an der Tischplattenunterseite nutzbar.

Nachfolgende Merkmale beziehen sich auf spezielle Ausführungen der Erfindung, wobei die Anschlussmittel an der Basis umfassen:
a) einen ersten Teller und einen dazu parallel beabstandet angeordneten zweiten Teller, die durch einen zentrischen Kern miteinander verbunden sind, wonach die Basis einen radfelgenartiger Körper hat;
b) im ersten Teller, ausserhalb des Kerns gelegen, eine Vielzahl von im Kreis systematisch angeordnete erste Löcher; und
c) im zweiten Teller, ausserhalb des Kerns gelegen, eine Vielzahl von im Kreis systematisch angeordnete zweite Löcher, die zu den ersten Löchern kongruent positioniert sind.

Die Aufnahmepartie zum Verbinden mit einem Fuss wird von einer zentrischen Vertiefung im zweiten Teller gebildet, die nach aussen offen ist und nach innen auf den Kern trifft. Der Fuss am oberen Ende seines Strebenteils besitzt ein daran fest angeordnetes Segment, das in die Aufnahmepartie einsetzbar ist.

Die Aufnahmepartie ist von im wesentlichen zylindrischer Geometrie und weist eine Positionierkontur auf. Das Segment am Fuss ist im wesentlichen von scheibenförmiger Geometrie und hat eine zum Zusammenwirken mit der Positionierkontur komplementäre Gegenkontur. Durch den Kern der Basis erstreckt sich ein Axialdurchgang. Das Segment am Fuss hat ein Schraubenloch, das im montierten Zustand zum Axialdurchgang der Basis fluchtet. Mittels einer vonseiten des ersten Tellers durch den Axialdurchgang der Basis und das Schraubenloch im Segment eingeführten Schraube ist das Segment in der Aufnahmepartie fixiert.

Die Oberseite des ersten Tellers der Basis hat die Gestalt eines Zahnkranzes, wonach die ersten Löcher an der Oberseite des ersten Tellers jeweils von einer Auskehlung umgeben sind, die sich zum Aussenumfang des ersten Tellers hin öffnet. Der Träger weist an seinen Enden ein Paar von Zungen auf, die zum Anmontieren auf jeweils einem der beiden Teller bestimmt sind. Die Konsole ist V-förmig mit zwei Streben beschaffen, die sich in einem Verbund vereinigen, der sich an der Tischplattenunterseite befestigen lässt, während die freien Enden der Streben jeweils eine Zunge haben, die übereinander positioniert jeweils zum Anmontieren auf einem der beiden Teller bestimmt sind.

Die Auskehlung öffnet sich zum Aussenumfang des ersten Tellers hin trichterartig erweitert. Die radialen Zahnsegmente des Zahnkranzes trennen benachbarte Auskehlungen voneinander, die zum Zentrum der Basis hin ausgerundet sind. Die Relation zwischen der Geometrie der Auskehlungen an der Basis und den Zungen am Träger sowie an der Konsole erlauben einen von den Rändern der Auskehlungen limitieren horizontalen Schwenkbereich für jeden an der Basis anmontierten Träger und Konsole. Im ersten und zweiten Teller der Basis sind vorzugsweise je 16 jeweils um 22.5° zueinander versetzte erste bzw. zweite Löcher vorgesehen. Der Träger ist ein Vierkanthohlprofil mit einem Raster von Durchbrüchen, welche zur Verkabelung unterhalb der Tischplatte nutzbar sind.

Das Strebenteil des Fusses hat eine wahlweise Form und Erstreckungsrichtung zu seinem unteren Ende, an dem direkt ein Bodenelement oder zunächst ein Ausleger angeordnet ist.

### Kurzbeschreibung der beigefügten Zeichnungen

Es zeigen:
- Figur 1A -: einen Tisch mit kreisrunder Tischplatte, Füssen erster Variante und dem erfindungsgemässen Gestellaufbau, in Perspektivansicht von oben;
- Figur 1B -: den Tisch gemäss Figur 1A, in Perspektivansicht von unten;
- Figur 1C -: die Anordnung gemäss Figur 1A, mit abgehobener Tischplatte;
- Figur 2A -: einen Tisch mit abgerundeter Tischplatte, einer ersten Variante von Füssen und dem Gestellaufbau, in Perspektivansicht von oben;

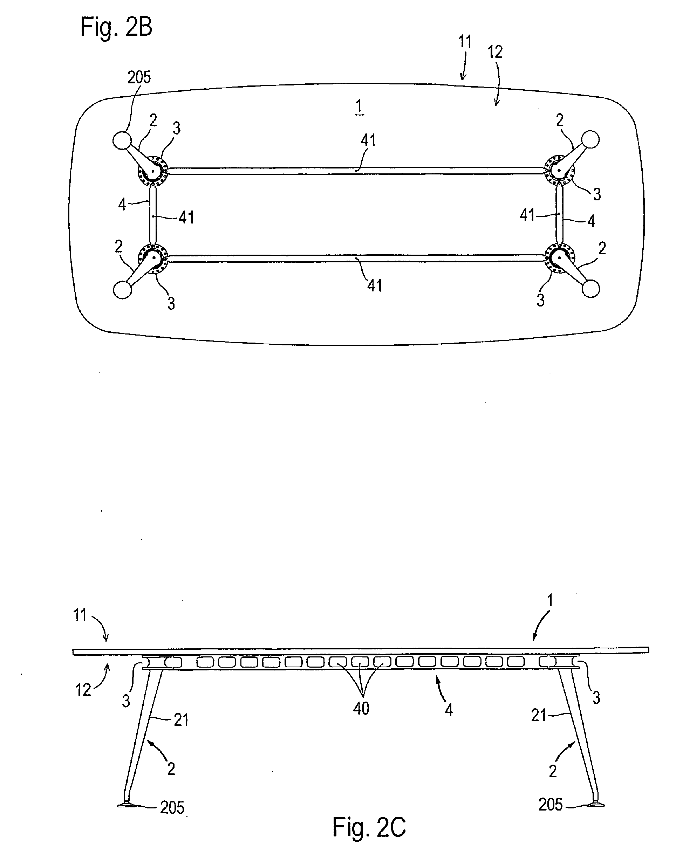

- Figur 2B -: den Tisch gemäss Figur 2A, in Ansicht von unten;
- Figur 2C -: den Tisch gemäss Figur 2A, in längsseitiger Ansicht;

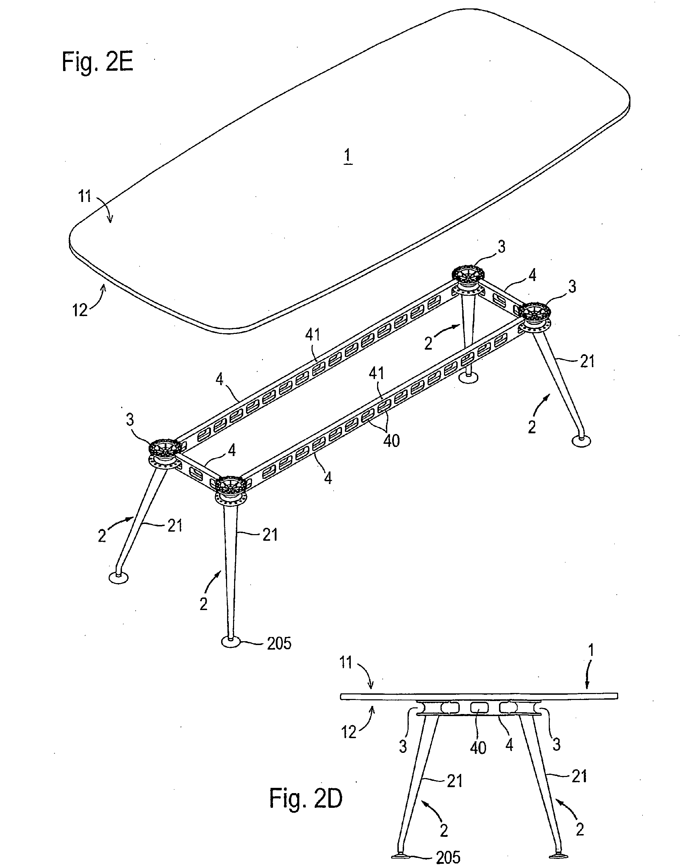

- Figur 2D -: den Tisch gemäss Figur 2A, in schmalseitiger Ansicht;
- Figur 2E -: die Anordnung gemäss Figur 2A, mit abgehobener Tischplatte;
- Figur 3 -: einen Tisch mit aus mehreren Plattensegmenten zusammenge- setzten grossflächigen Tischplatte, einer ersten Variante von Füs- sen und dem Gestellaufbau, in Ansicht von unten;
- Figur 4A -: einen Tisch mit rechteckiger Tischplatte, Füssen zweiter Variante und dem Gestellaufbau mit Konsolen, in Perspektivansicht von unten;
- Figur 4B -: die Anordnung gemäss Figur 4A, in partieller Explosivansicht;
- Figur 5A -: einen Tisch mit aus zwei Plattensegmenten zusammengesetzten rechteckigen Tischplatte, Füssen zweiter Variante und dem Ge- stellaufbau mit Konsolen, in Perspektivansicht von oben;
- Figur 5B -: den Tisch gemäss Figur 5A, in Perspektivansicht von unten;
- Figur 5C -: die Anordnung gemäss Figur 5A mit abgehobener Tischplatte;

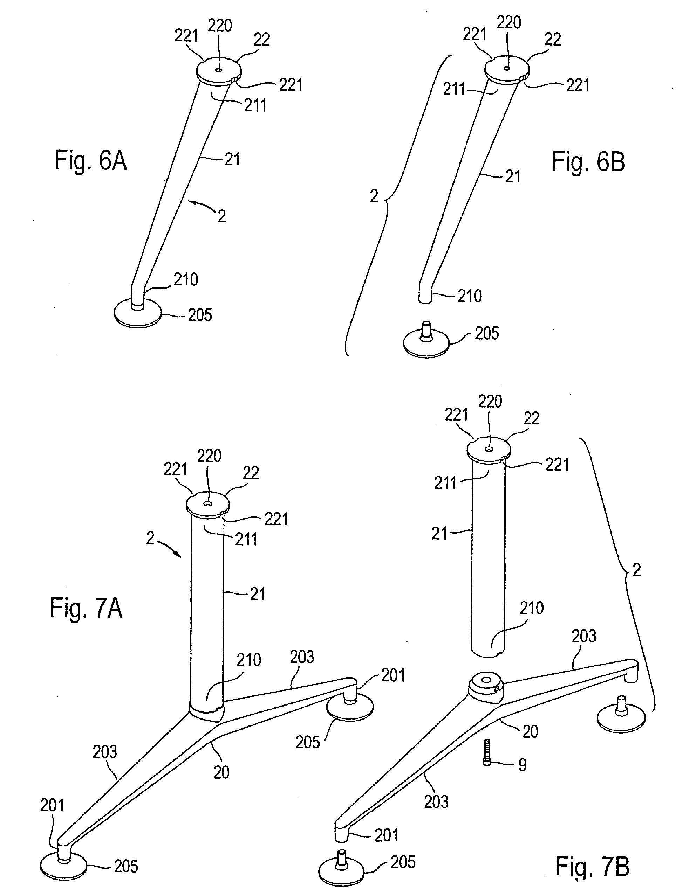

- Figur 6A -: einen Fuss erster Variante aus Figur 1A, in Perspektivansicht von oben;
- Figur 6B -: der Fuss gemäss Figur 6A, mit unmontiertem Bodenelement;
- Figur 7A -: einen Fuss zweiter Variante aus Figur 4A, in Perspektivansicht von oben;
- Figur 7B -: der Fuss gemäss Figur 7A, in Explosivansicht;

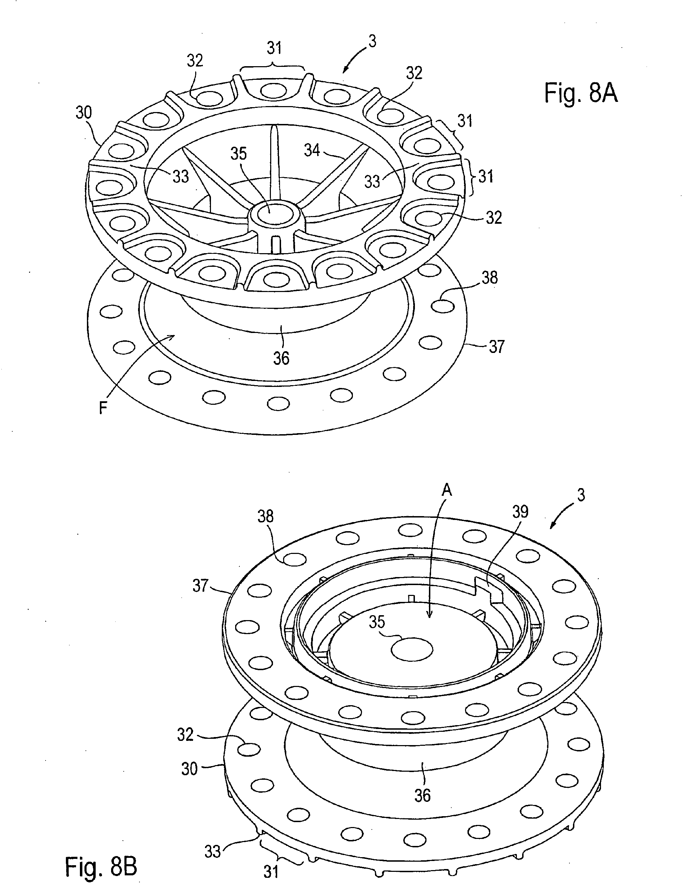

- Figur 8A -: eine Basis aus Figur 1B, in Perspektivansicht von oben;
- Figur 8B -: die Basis gemäss Figur 8A, in Perspektivansicht von unten;

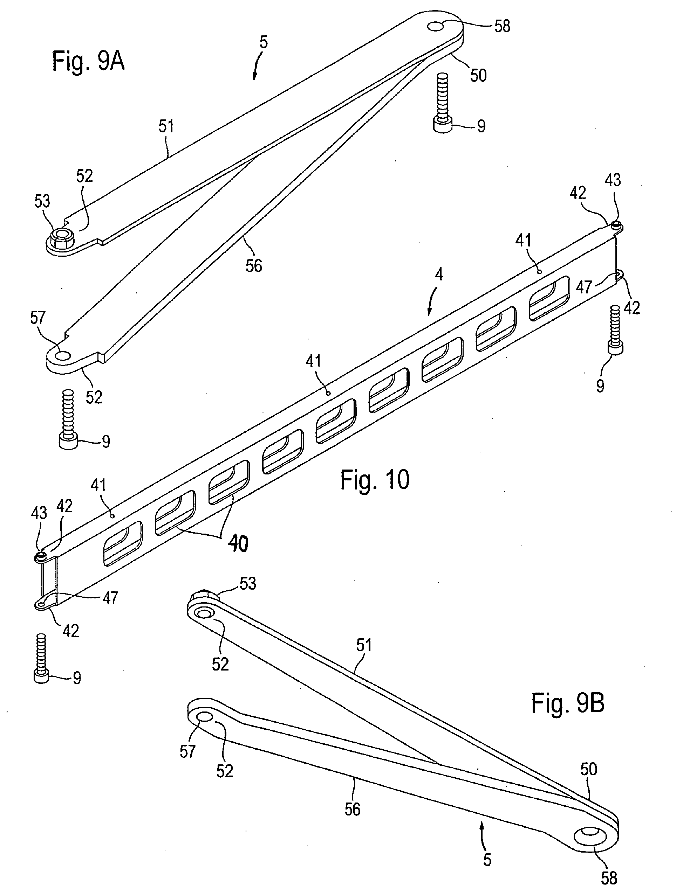

- Figur 9A -: eine Konsole aus Figur 4A, in Perspektivansicht von oben;
- Figur 9B -: die Konsole gemäss Figur 9A, in Perspektivansicht von unten;
- Figur 10 -: einen längeren Träger des Gestellaufbaus aus Figur 1B, in Per- spektivansicht von oben;

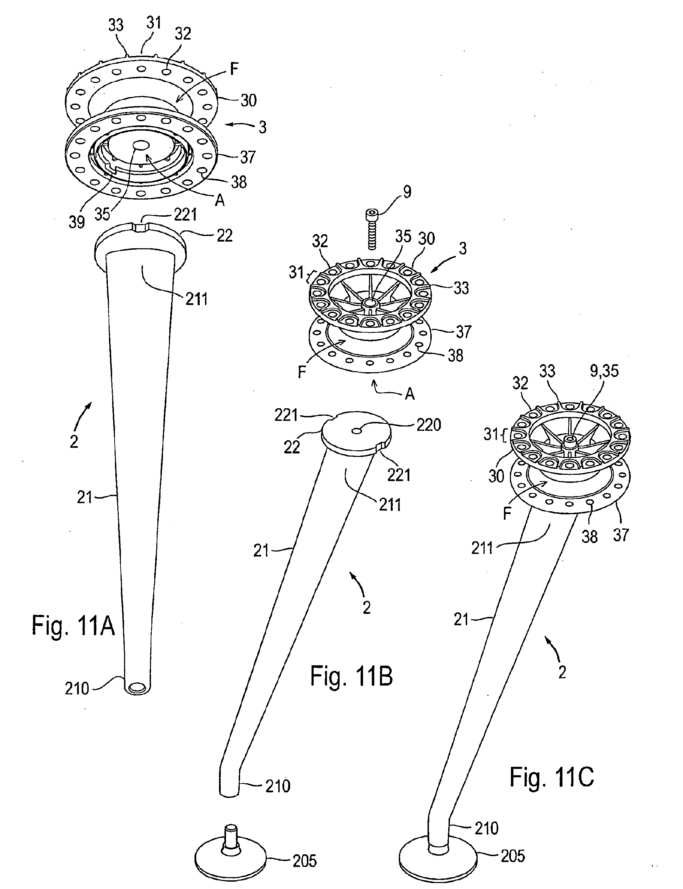

- Figur 11A -: einen Fuss erster Variante gemäss Figur 6A ohne Bodenelement, einer Basis gemäss Figur 8A angenähert, in Perspektivansicht von unten;
- Figur 11B -: die Anordnung gemäss Figur 11A, mit Bodenelement, unmontiert, in Perspektivansicht von oben;
- Figur 11C -: die Anordnung gemäss Figur 11B, montiert, in Perspektivansicht von oben;

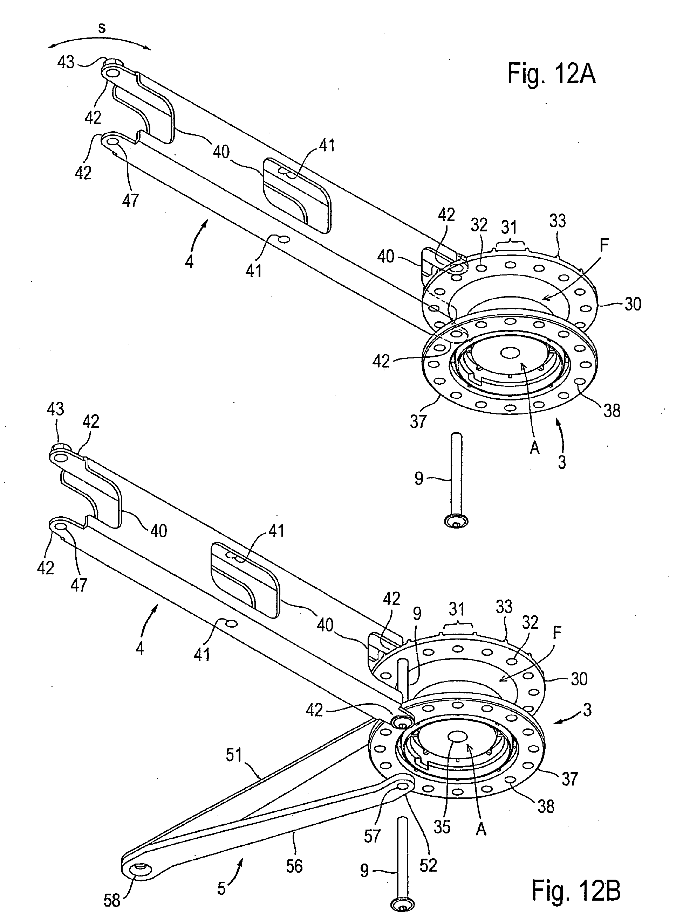

- Figur 12A -: einen Träger gemäss Figur 10 an eine Basis gemäss Figur 8A angedockt, in Perspektivansicht von unten;
- Figur 12B -: die Anordnung gemäss Figur 12A, mit anmontiertem Träger und angedockter Konsole gemäss Figur 9A, in Perspektivansicht von unten;

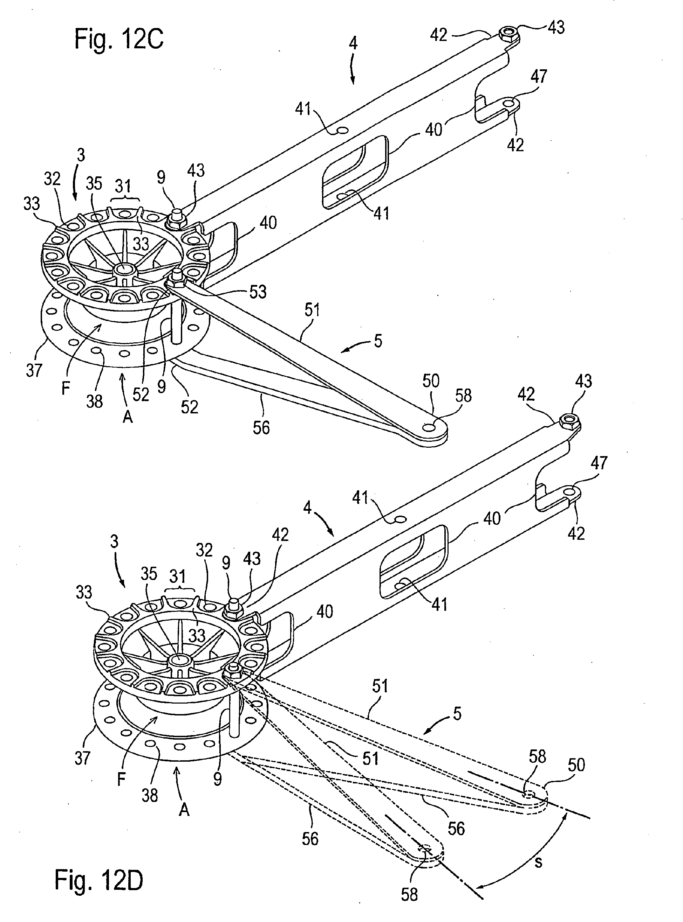

- Figur 12C -: die Anordnung gemäss Figur 12B, mit anmontiertem Träger und Konsole, in Perspektivansicht von oben; und
- Figur 12D -: die Anordnung gemäss Figur 12C, als Prinzipdarstellung der wähl- baren Abgangsrichtung von Konsole bzw. Träger.

### Ausführungsbeispiel

Anhand der beiliegenden Zeichnungen erfolgt nachstehend die detaillierte Beschreibung mehrerer Ausführungsbeispiele zum erfindungsgemässen Gestellaufbau mit zwei Varianten von Füssen und verschieden konfigurierten Tischgrössen und -formen.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figuren 1 A bis 1 C

In dieser Figurenfolge hat der Tisch eine kreisrunde Tischplatte 1 mit der Oberseite **11** und der Unterseite **12.** Die Tischplatte **1** wird von einem Gestellaufbau aus vier im Quadrat angeordneten Trägern **4,** jeweils einer im Eckbereich eingebauten Basis **3** und je einem an jeder Basis **3** befestigten Fuss **2** erster Variante getragen. Der Fuss besitzt ein langgestrecktes Bein **21,** an dessen unteren Ende ein Bodenelement **205** anmontiert ist, das bei stehendem Tisch auf dem Boden aufsetzt. Die Basis **3** hat einen radfelgenartigen Körper, der auf die Tischplättenunterseite **12** aufsetzt und je nach konzipierter Belastung und Tischkonfiguration an der Unterseite **12** verschraubt ist und ansonsten - im hiesigen Beispiel - von jeweils von zwei zueinander im rechten Winkel anmontierten Trägern **4** gestützt wird. Die Träger **4** bestehen aus einem Vierkanthohlprofil, das hochkant eingebaut ist und ein Raster aus Durchbrüchen **40** aufweist, die jeweils kongruent in beiden Seitenwandungen vorhanden sind. Die Durchbrüche **40** sind für die Halterung von Kabeln nutzbar, welche sich in den errichteten Gestellaufbau vor dem Aufsetzen der Tischplatte praktisch installieren lassen. Beispielsweise im Bereich jedes zweiten Durchbruchs **40** ist ein erstes Loch **41** vorhanden, das sich senkrecht durch beide Trägerwandungen auf die Tischplattenunterseite **12** erstreckt. Diese ersten Löcher **41** dienen dem Anschrauben der Träger **4** an der Tischplattenunterseite **12.** Die Oberseiten der Basen **3** und der Träger **4** bilden eine Auflageebene für die Tischplatte **1.**

### Figuren 2A bis 2E

In einer alternativen Tischform wird eine abgerundete, längliche, vorzugsweise einstückige Tischplatte **1** verwendet, zu der angepasst der Gestellaufbau nun aus vier im länglichen Rechteck angeordneten Trägern **4** besteht, in dessen Eckbereichen wiederum jeweils eine Basis **3** mit daran befestigtem Fuss **2** eingebaut ist. An den Schmalseiten des Tisches befinden sich entsprechend kurze Träger **4,** während sich über die Längsseiten um ein Vielfaches längere Träger **4** erstrecken. Die benutzten Füsse **2** erster Variante haben ein Bein **21,** das sich bockartig von der Basis **3** abspreizt.

### Figur 3

Bei Bedarf eines Tisches grosser Ausdehnung mit grossflächiger Tischplatte 1 - z.B. in Bootsform - wird eine solche aus mehreren aneinander gefügten Plattensegmenten **16** zusammengesetzt. Danach adäquat ist der Gestellaufbau errichtet. Vorzugsweise konzipiert man hierfür einen Verlauf mehrerer Abschnitte von Trägern **4,** die jeweils etwa dem gleichen Abstand zur Aussenkante der Tischplatte **1** folgen. Unter jedem Plattensegment **16** sind zwei Basen **3** vorhanden, wobei an den jeweils zwei Basen 3 an den Schmalseiten der Tischplatte **1** jeweils zwei Träger **4** anmontiert sind. Die übrigen Basen **3** nehmen T-förmig jeweils drei Träger **4** auf, was durch die Fortführung mit Trägern **4** in beiden Richtungen der Tischlängsseite und die Querverbindung zur gegenüberliegenden Tischlängsseite entsteht. Durch die Verstrebung mit den Trägern **4** unter der zusammengesetzten Tischplatte **1** und den unter jedem Plattensegment **16** angeordneten zwei Basen **3** mit den abstützenden Füssen **2** erhält der ausladende Tisch seine Stabilität. Die Beine **21** haben jeweils eine Schrägauslage zur Aussenkante der Tischplatte **1** hin. Der einzelne Träger **4** wird je nach Länge durch mehrere erste Löcher **41** hindurch mit der Tischplattenunterseite **12** verschraubt sein. Eine zusätzliche Verschraubung empfiehlt sich für die Basen **3.**

### Figuren 4A und 4B

Diese Konfiguration umfasst eine rechteckige Tischplatte **1,** einen mittig an der Tischplattenunterseite **12** angebrachten Träger **4,** an dessen Enden sich jeweils eine Basis **3** befindet, welche einen Fuss **2** zweiter Variante aufnimmt. Im Verhältnis zum angeschlossenen Träger **4** erstrecken sich von der Basis **3** T-förmig je zwei zueinander fluchtende gabelförmige Konsolen **5,** die an ihrem Verbund **50** an der Tischplattenunterseite **12** verschraubt sind. Zur Montage an der Basis 3 endet der Träger **4** jeweils mit zwei übereinander liegenden Zungen **42.** Die vier Konsolen **5** mit dem dazwischen eingefügten Träger **4** ergeben eine H-Struktur. Der Fuss **2** zweiter Variante besitzt ein sich gerade von der Basis **3** erstreckendes rohrförmiges Bein **21,** welches unten mit einem Ausleger **20** verbunden ist, der zwei in entgegengesetzter Richtung weisende Arme **203** hat, an deren Enden Bodenelemente **205** angebracht sind.

### Figuren 5A bis 5C

In einer weiteren Gestaltungsmöglichkeit beruht der Gestellaufbau auf drei in Linie angeordneten Basen **3,** deren Abstände jeweils von einem Träger **4** überbrückt werden. An die beiden äusseren Basen **3** sind, wie im Vorgängerbeispiel, je zwei zueinander fluchtende Konsolen **5** angeschlossen. Die mittlere Basis **3** ist auf der Fuge zwischen zwei rechteckigen, mit ihren Schmalseiten aneinandergefügten Plattensegmenten **16** angeordnet. Diese Basis **4** ist mit vier jeweils um 90° zueinander versetzten Konsolen **5** verbunden, wobei sich sternförmig je zwei Konsolen **5** auf eines der zusammentreffenden Plattensegmente **16** erstrecken und dort die Verbunde **50** mittels Schrauben **9** an der Tischplattenunterseite **12** verschraubt sind. Es ist praktisch, zunächst den Gestellaufbau zu errichten, eine eventuelle Verkabelung unter Nutzung der Durchbrüche **40** im Träger **4** anzubringen und erst zuletzt die Plattensegmente **16** zu montieren. Eine solche Arbeitsfolge ermöglicht die weitgehende Montage in stehender Haltung und vermeidet längeres Arbeiten gebückt, unterhalb der Tischplatte **1.** Bei kleineren Tischen lässt sich das Gestell für ein bequemeres Montieren eventuell auf den Kopf stellen, was bei sehr grossen Tischen nicht realistisch ist, so dass insbesondere dann die Vorteile des erfindungsgemässen Gestellaufbaus zur Geltung kommen.

### Figuren 6A und 6B

Der Fuss **2** erster Variante hat als wesentlichen Teil das schräg ausladende, sich nach unten verjüngende Bein **21,** an dessen unterem Ende **210** üblicherweise ein einsteckbares Bodenelement **205** angebracht ist. Am oberen, verdickten Ende **211** ist horizontal ein im wesentlichen kreisrundes Segment **22** angeordnet, das ein zentrisches Schraubenloch **220** und am Aussenumfang zumindest eine Gegenkontur **221** besitzt. Die Gegenkonturen **221** sind als Aussparungen erzeugt.

### Figuren 7A und 7B

Der Fuss **2** zweiter Variante hat als wesentlichen Teil ein gerades rohrförmiges Bein **21,** an dessen unterem Ende **210** ein quer verlaufender Ausleger **20** mit zwei sich in entgegengesetzter Richtung erstreckenden Armen **203** angesetzt ist. An den Enden **201** der Arme **203** sind wiederum eingesteckte Bodenelemente **205** angebracht. Am oberen Ende **211** des Beins **21** ist erneut - wie beim Fuss **2** erster Variante - horizontal das im wesentlichen kreisrunde Segment **22** vorhanden, das unverändert ein zentrisches Schraubenloch **220** und am Aussenumfang zwei um 180° zueinander stehende Gegenkonturen **221** besitzt. Ob man Füsse **2** der ersten oder zweiten Variante einsetzt, hängt vom Gestaltungskonzept, dem Verwendungszweck des Tischs und eventuell der Konfiguration der Tischplatte 1 ab.

### Figuren 8A und 8B

Die Basis **3** hat, ähnlich einer Radfelge, einen zur Tischplattenunterseite **12** hin gewandten ersten Teller **30** und einen dazu parallel beabstandeten, kongruent positionierten zweiten Teller **37,** wobei beide Teller **30,37** von einem quasi taillierten Kern **36** verbunden werden. Zwischen den Tellern **30,37** entsteht somit um den Kern **36** herum ein ringförmiger Freiraum F. Zentrisch durch den Kern **36** verläuft ein Axialdurchgang **35,** und vom Kern **36** erstrecken sich sternförmig Rippen **34.** Im ersten Teller **30,** ausserhalb des Kerns **36** gelegen, sind systematisch im Kreis angeordnete erste Löcher **32** vorhanden, zu denen kongruent im zweiten Teller **37** zweite Löcher **38** liegen und somit das Einführen von Schrauben 9 ermöglichen. Durch Materialabtrag bzw. -reduktion ist jedes erste Loch **32** von einer Kehle **31** umrandet, die nach aussen erweitert ist und zum Zentrum hin mit einer runden Schulter endet. Die Oberseite des ersten Tellers **30** erhält damit die Struktur eines Zahnkranzes **33,** dessen innerer Bereich ringförmig umläuft, während die Zahnkonturen jeweils zwei benachbarte Kehlen **31** voneinander abgrenzen. Die Oberseite des ersten Tellers **30** bildet damit eine Horizontalebene für ein solides Anliegen an der Tischplattenunterseite **12.**

Im zweiten Teller **37** ist eine nach aussen offene zentrische Vertiefung vorgesehen, die nach innen auf den Kern **36** trifft und somit eine im Prinzip zylindrische Aufnahmepartie **A** zum Verbinden mit dem Fusssegment **22** bildet. Am Boden der Aufnahmepartie **A** tritt der Axialdurchgang **35** zentrisch aus. Im Aussenmantel hat die Aufnahmepartie **A** zwei gegenüberliegende Positionierkonturen **39,** die zum formschlüssigen Zusammenwirken mit den Gegenkonturen **221** am Fusssegment **22** bestimmt sind und somit eine Verdrehsicherung für den eingesetzten Fuss 2 darstellen.

### Figuren 9A und 9B

Die Konsole 5 hat im Prinzip die Gestalt einer Gabel mit an einem Ende liegenden Verbund **50,** von dem sich eine erste Strebe **51** gerade erstreckt und eine zweite Strebe **56** V-förmig abgeht, wobei beide Streben **51,56** kongruent untereinander liegen. Durch den Verbund **50** verläuft ein erstes Loch **58** zum Durchlass einer Schraube **9.** An ihren freien Enden besitzen die Streben **51,56** jeweils eine verjüngte, zuvorderst abgerundete Zunge **52,** wobei äusserlich an der Zunge **52** der ersten Strebe **51** eine Mutter **53** fest angebracht ist, z.B. durch Anschweissen. Durch die Zunge **52** der zweiten Strebe 56 verläuft ein zweites Loch **57,** so dass man eine Schraube **9** einführen kann, deren Gewindebolzen in die Mutter 53 eingreift.

### Figur 10

Der Träger **4** ist ein Vierkanthohlprofil, das hochkant in den Gestellaufbau eingebaut wird und ein Raster aus Durchbrüchen **40** hat, die jeweils deckungsgleich in beiden Seitenwandungen existieren. Im Bereich jedes zweiten Durchbruchs **40** ist ein erstes Loch **41** vorhanden, das senkrecht beide Trägerwandungen durchdringt. Die Durchbrüche **40** sind zur Gewichtsersparnis, vor allem aber zum Einbringen von Schrauben **9** durch die ersten Löcher **41** und zur Halterung von Kabeln zweckmässig. Zum Anschluss an der Basis 3 endet der Träger 4 jeweils mit zwei übereinander liegenden Zungen **42,** wobei an der oberen Zunge **42** äusserlich eine Mutter **43** angeordnet ist und sich in der unteren Zunge **42** eine zweites Loch **47** befindet, um eine Schraube **9** einzustecken, deren Gewindebolzen in die Mutter **43** eingreift. Die Seitenwandungen des Trägers **4** sind im Bereich der Zungen **42** freigeschnitten.

### Figuren 11A bis 11 C

Diese Figurenfolge veranschaulicht die Montage zwischen einem Fuss **2** und der Basis **3** am Beispiel des Fusses **2** erster Variante. Der Fuss 2 wir mit dem Segment **22** voran an die Aufnahmepartie **A** herangeführt und in letztere eingesteckt. Hierbei sind die Gegenkonturen **221** am Segment **22** mit den Positionskonturen **39** in der Aufnahmepartie **A** zur Deckung zu bringen und weiter anzunähern, bis die Konturen **221,39** ineinander eingreifen. Damit kommt auch der Axialdurchgang **35** mit dem Schraubenloch **220** zueinander in Flucht zu liegen. Mit dem Gewindebolzen voran wird eine Schraube **9** vonseiten des ersten Tellers 30 in den Axialdurchgang **35** eingeführt und in das Schraubenloch **220** fest eingedreht. Damit sind Fuss **2** und Basis **3** rotationsgesichert miteinander verbunden.

### Figur 12A

Beim Anschluss eines Trägers **4** an der Basis **3** wird der hochkant stehende Träger **4** so an die Basis **3** herangeführt, dass die obere Zunge **42** mit der Mutter **43** auf der Oberseite des ersten Tellers 30 in einer ausgewählten Kehle **31** liegt und die untere Zunge **42** den zweiten Teller **37** unterfasst. Hierbei sollen das zweite Loch **47,** ein zweites Loch **38** am zweiten Basisteller **37** und das Innengewinde der Mutter **43** sowie ein erstes Loch **32** am ersten Basisteller **30** zueinander fluchten, um vonseiten des zweiten Basistellers **37** eine Schraube **9** mit ihrem Gewindebolzen voran einzuführen, bis letzterer in die Mutter **43** eingreift.

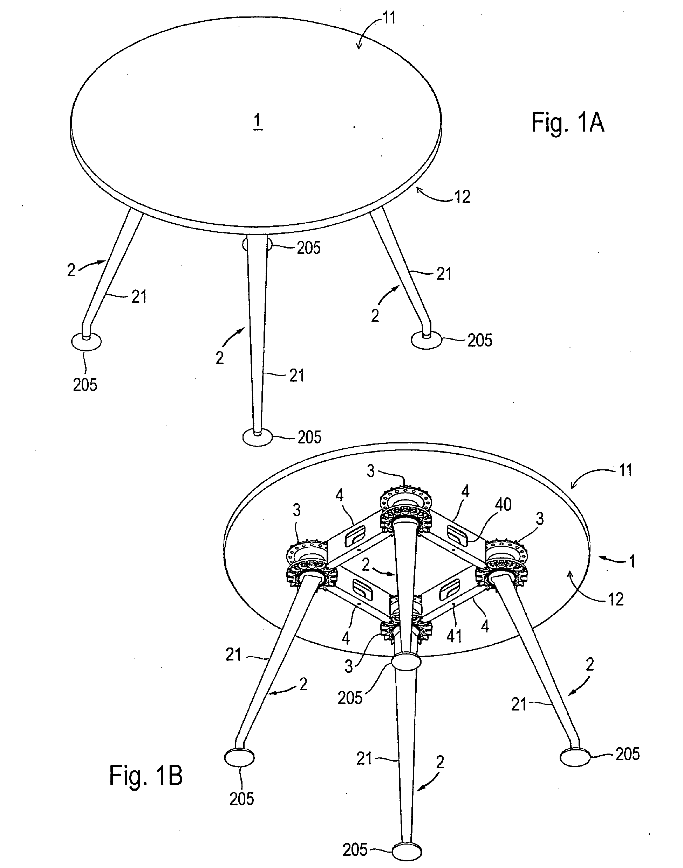

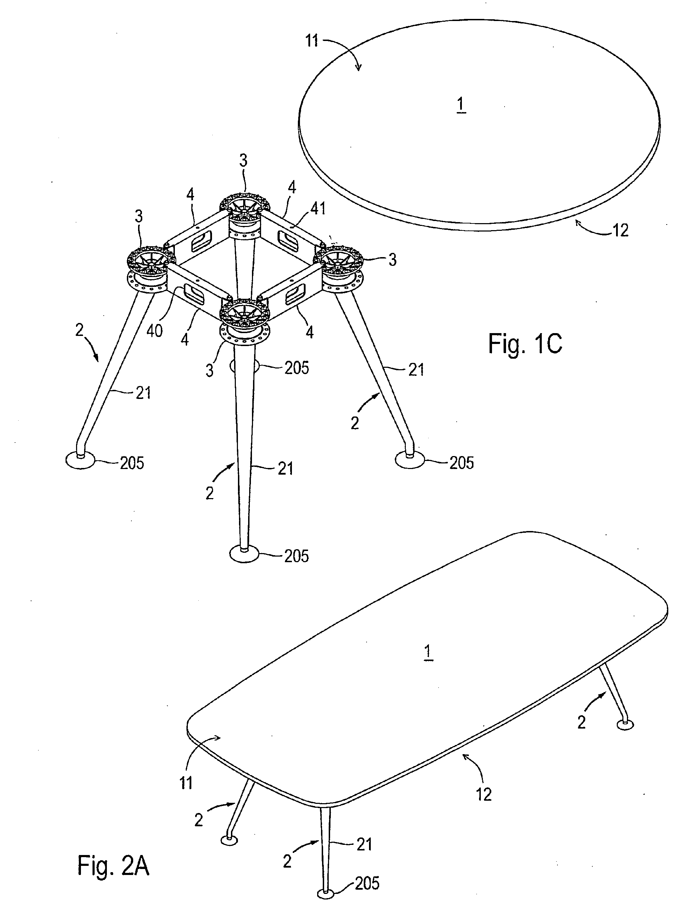

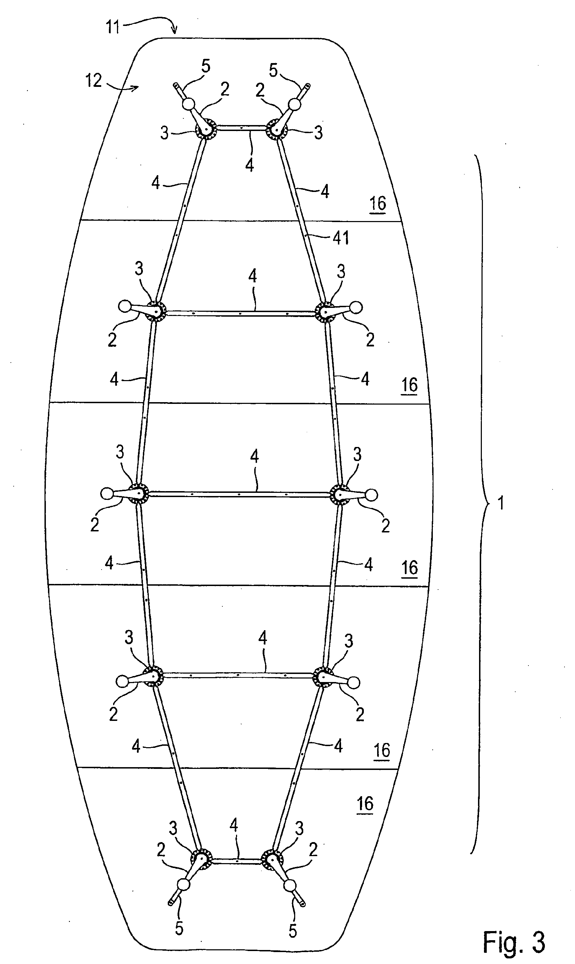

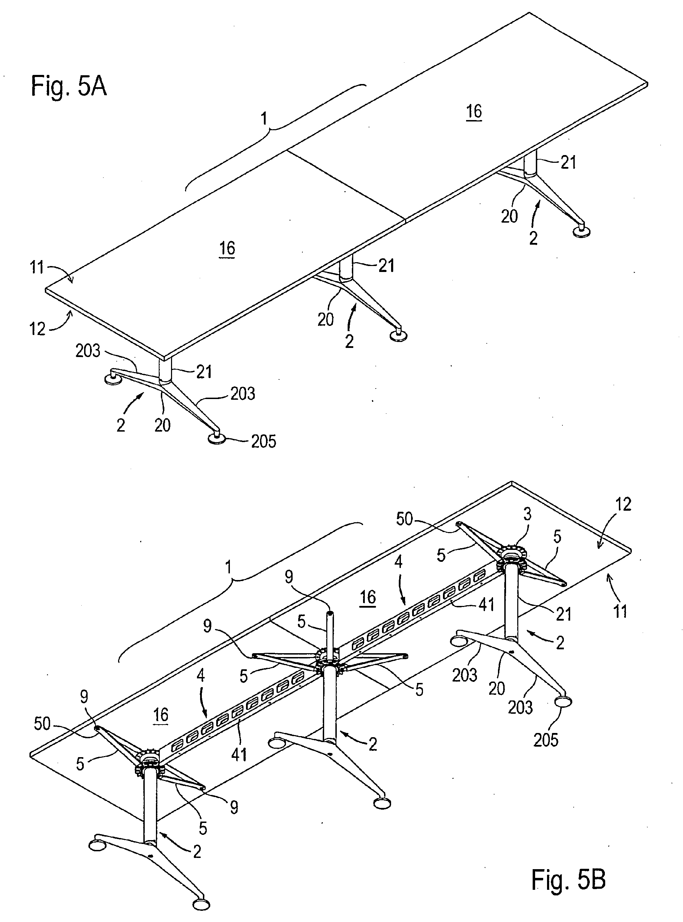

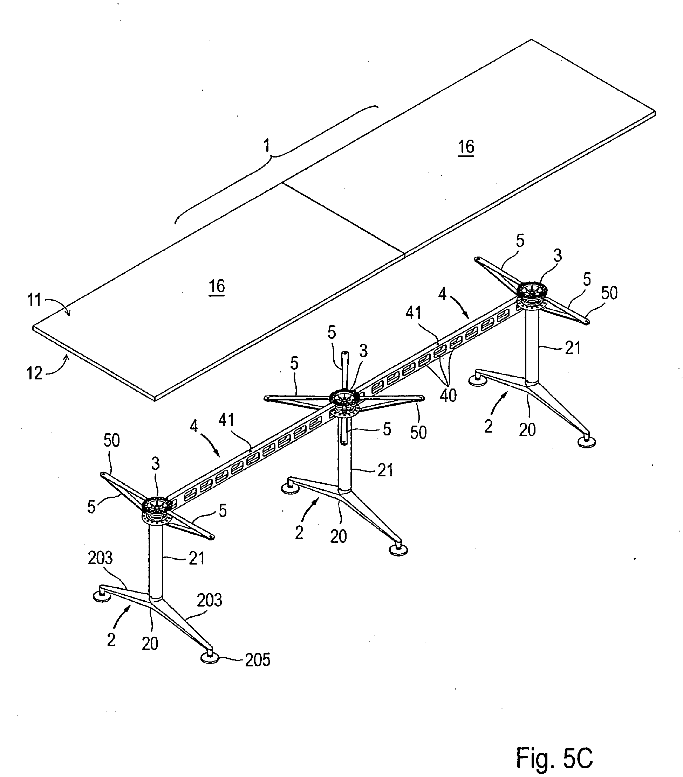

Vorteilhaft sind an der Basis **3** je 16 erste und zweite Löcher **32,38** vorhanden, die eine Teilung von je 22.5° ergeben. Die zum Aussenumfang hin sich erweiternden Kehlen **31,** gegenüber den verjüngten Zungen **42** am Träger **4,** erlau**ben** über 16 wählbare Abgangsrichtungen für den an der Basis **3** angeschlossen Träger **4** hinaus, einen zusätzlichen Schwenkbereich **s.** Innerhalb dieses Schwenkbereichs **s** lässt sich der anmontierte Träger **4** entsprechend der konzipierten Konfiguration der Tischplatte **1** mit den eventuellen mehreren Plattensegmenten **16** in einer Art Feineinstellung ausrichten, um schliesslich bei fest angezogener Schraube **9** in der justierten Position fixiert zu werden. Der Schraubenbolzen durchragt hierbei senkrecht den Freiraum F. Bei Bedarf lassen sich weitere Träger **4** an der gleichen Basis **3** anschliessen, z.B. zwei zueinander im rechten Winkel stehende Träger **4** gemäss Figur 1B, zwei zueinander fluchtende Träger **4** gemäss Figur 5B oder drei zueinander T-förmig stehende Träger **4** gemäss Figur 3. Beispielsweise ein Paar der noch unbelegten ersten und zweiten Löcher **32,38** könnte für eine zusätzliche Verschraubung der Basis **3** mit der Tischplattenunterseite **12** genutzt werden.

### Figur 12B bis 12D

Bei einer erforderlichen verstärkten Stützung einer grösseren Tischplatte **1** werden an der Basis **3** Konsolen **5** angeschlossen, deren Verbund **50** durch die darin vorhandenen ersten Löcher **58** mit der Tischplattenunterseite **12** verschraubt sind. Beim Anschluss einer Konsole **5** an der Basis **3** wird die Konsole **5** mit ihren beiden voneinander gespreizten Streben **51,56** so an die Basis **3** herangeführt, dass die Zunge **52** der ersten Strebe **51** mit der Mutter **53** auf der Oberseite des ersten Tellers **30** in einer ausgewählten Kehle **31** liegt und die Zunge **52** der zweiten Strebe **56** den zweiten Teller **37** unterfasst. Hierbei sollen das zweite Loch **57,** ein zweites Loch **38** am zweiten Basisteller **37** und das Innengewinde der Mutter **53** sowie ein erstes Loch **32** am ersten Basisteller **30** zueinander fluchten, um vonseiten des zweiten Basistellers **37** eine Schraube **9,** mit ihrem Gewindebolzen voran, einzuführen, bis letzterer in die Mutter **53** eingreift.

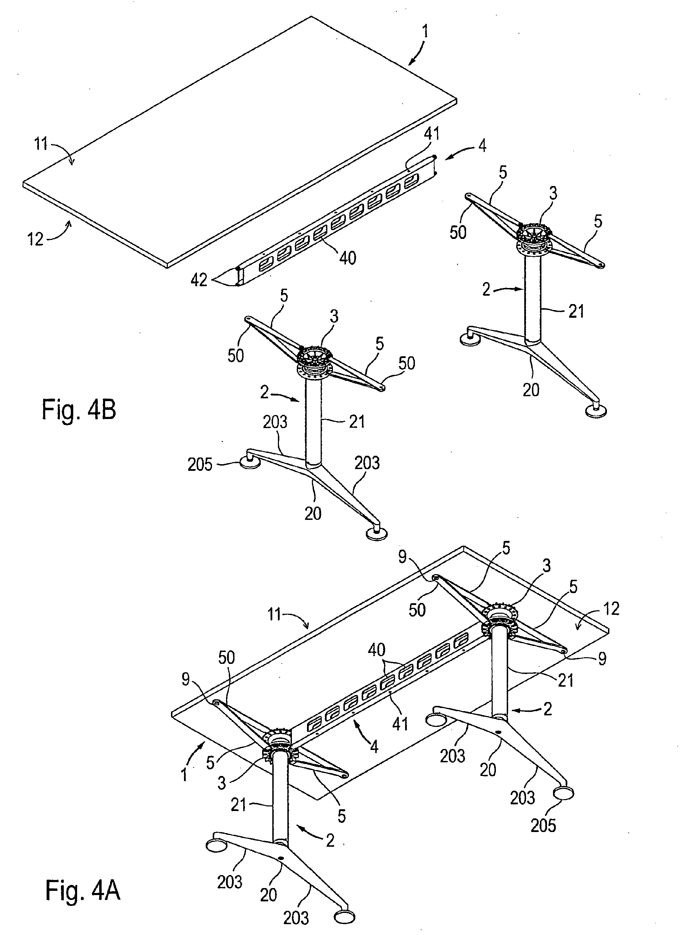

Die Massverhältnisse zwischen den Kehlen **31** an der Basis **3** und den Zungen **52** an der Konsole **5** erlauben auch hier über 16 wählbare Abgangsrichtungen hinaus einen zusätzlichen Schwenkbereich **s,** um mit dem Verbund **50** und dem darin vorhandenen Schraubenloch **58** eine für die Stabilität optimale Position an der Tischplattenunterseite **12** zu erreichen. Bei Bedarf lassen sich entsprechend der bisherigen Belegung durch die Träger **4** weitere Konsolen **5** an der gleichen Basis **3** anschliessen, z.B. zwei zueinander fluchtende Konsolen **5** gemäss Figur 4A oder vier zueinander kreuzförmig stehende Konsolen **5** gemäss Figur 5B. Mit den 16 vorhandenen ersten und zweiten Löcher **32,38** werden weiterhin Paare davon für eine zusätzliche Verschraubung der Basis 3 mit der Tischplattenunterseite **12** frei bleiben.

## Patentansprüche

1. Gestellaufbau für einen Tisch mit:
a) einer von Füssen **(2)** getragenen Tischplatte **(1),** welche eine Tischplattenoberseite **(11)** als Arbeitsfläche und eine Tischplattenunterseite **(12)** aufweist;
b) einem an der Tischplattenunterseite **(12)** befestigten Träger **(4);** und
c) einer je Fuss **(2)** unterhalb der Tischplatte **(1)** angeordneten Basis **(3)** mit einer Aufnahmepartie **(A),** an welcher der jeweils zugehörige Fuss **(2)** anmontiert ist; wobei
d) die Basis **(3)** Anschlussmittel **(30,32;37,38)** zum Verbinden mit mehreren Trägern **(4)** verschiedener, wahlweiser Abgangsrichtung besitzt,
**dadurch gekennzeichnet, dass**
e) die Anschlussmittel **(30,32;37,38)** an der Basis **(3)** ausser zum Verbinden mit zumindest einem Träger **(4)** gleichzeitig zum Verbinden mit zumindest einer Konsole **(5)** im zum Träger **(4)** verschiedener Abgangsrichtung nutzbar sind;
**f)** die Konsole **(5)** andererseits sich an der Tischplattenunterseite **(12)** fixieren lässt; und
g) insoweit unbelegte Anschlussmittel **(30,32;37,38)** an der Basis **(3)** zur Befestigung an der Tischplattenunterseite **(12)** nutzbar sind.

2. Gestellaufbau nach Anspruch 1, **dadurch gekennzeichnet, dass** die Anschlussmittel **(30,32;37,38)** an der Basis (3) umfassen:
a) einen ersten Teller **(30)** und einen dazu parallel beabstandet angeordneten zweiten Teller **(37),** die durch einen zentrischen Kern **(36)** miteinander verbunden sind, wonach die Basis **(3)** einen radfelgenartiger Körper hat;
b) im ersten Teller **(30),** ausserhalb des Kerns **(36)** gelegen, eine Vielzahl von im Kreis systematisch angeordnete erste Löcher **(32);** und
c) im zweiten Teller **(37),** ausserhalb des Kerns **(36)** gelegen, eine Vielzahl von im Kreis systematisch angeordnete zweite Löcher **(38),** die zu den ersten Löchern **(32)** kongruent positioniert sind.

3. Gestellaufbau nach zumindest einem der Ansprüche 1 und 2, **dadurch gekennzeichnet, dass**
a) die Aufnahmepartie **(A)** zum Verbinden mit einem Fuss **(2)** von einer zentrischen Vertiefung im zweiten Teller **(37)** gebildet wird, die nach aussen offen ist und nach innen auf den Kern **(36)** trifft; und
b) der Fuss **(2)** am oberen Ende **(211)** seines Strebenteils **(21)** ein daran fest angeordnetes Segment **(22)** besitzt, das in die Aufnahmepartie **(A)** einsetzbar ist.

4. Gestellaufbau nach zumindest einem der Ansprüche 1 bis 3, **dadurch gekennzeichnet, dass**
a) die Aufnahmepartie **(A)** von im wesentlichen zylindrischer Geometrie ist und eine Positionierkontur **(39)** aufweist;
b) das Segment **(22)** am Fuss **(2)** im wesentlichen von scheibenförmiger Geometrie ist und eine zum Zusammenwirken mit der Positionierkontur **(39)** komplementäre Gegenkontur **(221)** hat;
c) sich durch den Kern **(36)** der Basis **(3)** ein Axialdurchgang **(35)** erstreckt;
d) das Segment **(22)** am Fuss **(2)** ein Schraubenloch **(220)** hat, das im montierten Zustand zum Axialdurchgang **(35)** der Basis **(3)** fluchtet; und
e) mittels einer vonseiten des ersten Tellers **(30)** durch den Axialdurchgang **(35)** der Basis **(3)** und das Schraubenloch **(220)** im Segment **(22)** eingeführten Schraube **(9),** das Segment **(22)** in der Aufnahmepartie **(A)** fixiert ist.

5. Gestellaufbau nach zumindest einem der Ansprüche **1** bis 4, **dadurch gekennzeichnet, dass**
a) die Oberseite des ersten Tellers **(30)** der Basis **(3)** die Gestalt eines Zahnkranzes **(33)** hat, wonach die ersten Löcher **(32)** an der Oberseite des ersten Tellers **(30)** jeweils von einer Auskehlung **(31)** umgeben sind, die sich zum Aussenumfang des ersten Tellers **(30)** hin öffnet;
b) der Träger **(4)** an seinen Enden ein Paar von Zungen **(42)** aufweist, die zum Anmontieren auf jeweils einem der beiden Teller **(30,37)** bestimmt sind; und
c) die Konsole **(5)** V-förmig mit zwei Streben **(51,56)** beschaffen ist, die sich in einem Verbund **(50)** vereinigen, der sich an der Tischplattenunterseite **(12)** befestigen lässt, während die freien Enden der Streben **(51,56)** jeweils eine Zunge **(52)** haben, die übereinander positioniert jeweils zum Anmontieren auf einem der beiden Teller **(30,37)** bestimmt ist.

6. Gestellaufbau nach zumindest einem der Ansprüche 1 bis 5, **dadurch gekennzeichnet, dass**
a) sich die Auskehlung **(31)** zum Aussenumfang des ersten Tellers **(30)** hin trichterartig erweitert öffnet;
b) die radialen Zahnsegmente des Zahnkranzes **(33)** benachbarte Auskehlungen **(31)** voneinander trennen, die zum Zentrum der Basis **(3)** hin ausgerundet sind; und
c) die Relation zwischen der Geometrie der Auskehlungen **(31)** an der Basis **(3)** und den Zungen **(42,52)** am Träger **(4)** und an der Konsole **(5),** einen von den Rändern der Auskehlungen **(31)** limitieren horizontalen Schwenkbereich **(s)** für jeden an der Basis **(3)** anmontierten Träger **(4)** und Konsole **(5)** erlauben.

7. Gestellaufbau nach zumindest einem der Ansprüche 1 bis 6, **dadurch gekennzeichnet, dass**
a) im ersten und zweiten Teller **(30,37)** der Basis **(3)** je 16 jeweils um 22.5° zueinander versetzte erste bzw. zweite Löcher **(32,38)** vorgesehen sind; und
b) der Träger **(4)** ein Vierkanthohlprofil mit einem Raster von Durchbrüchen **(40)** ist, welche zur Verkabelung unterhalb der Tischplatte **(1)** nutzbar sind.

## Claims

1. Frame structure for a table, having:
a) a table top **(1)** supported by legs **(2),** said table top **(1)** having an upper side **(11)** as working surface and an underside **(12);**
b) a support **(4)** fastened to the table top underside **(12);** and
c) for each leg **(2)** a base **(3),** which is arranged underneath the table top **(1)** and has an accommodating part **(A)** on which the respectively associated leg **(2)** is fitted; wherein
d) the base **(3)** has connecting means **(30,32;37,38)** for connecting to a plurality of supports **(4)** having different, selectable outgoing directions, **characterized in that**
e) the connecting means **(30,32;37,38)** on the base **(3)** can be used not only for connecting to at least one support **(4)** but also at the same time for connecting to at least one bracket **(5)** in an outgoing direction different from that of the support **(4);**
f) the other end of the bracket **(5)** can be fixed to the table top underside **(12);** and
g) in this respect unoccupied connecting means **(30,32;37,38)** on the base **(3)** can be used for fastening to the table top underside **(12).**

2. Frame structure according to Claim 1, **characterized in that** the connecting means **(30,32;37,38)** on the base (3) comprise:
a) a first plate **(30)** and a second plate **(37)** arranged parallel thereto and at a distance therefrom, said plates being connected together by a central core **(36),** whereby the base **(3)** has a wheel-rim-like body;
b) a multiplicity of first holes **(32)** arranged systematically in a circle in the first plate **(30),** outside the core **(36);** and
c) a multiplicity of second holes **(38)** arranged systematically in a circle in the second plate **(37),** outside the core **(36),** said second holes **(38)** being positioned congruently with the first holes **(32).**

3. Frame structure according to at least one of Claims 1 and 2, **characterized in that**
a) the accommodating part **(A)** for connecting to a leg **(2)** is formed from a central depression in the second plate **(37),** said depression being open towards the outside and meeting the core **(36)** on the inside; and
b) the leg **(2)** has at the top end **(211)** of its strut part **(21)** a segment **(22)** which is arranged fixedly thereon and can be inserted into the accommodating part **(A).**

4. Frame structure according to at least one of Claims 1 to 3, **characterized in that**
a) the accommodating part **(A)** has a substantially cylindrical geometry and a positioning contour **(39);**
b) the segment **(22)** on the leg **(2)** has a substantially disc-like geometry and a complementary mating contour **(221)** in order to interact with the positioning contour **(39);**
c) an axial passage **(35)** extends through the core **(36)** of the base **(3);**
d) the segment **(22)** on the leg **(2)** has a screw hole **(220)** which is aligned with the axial passage **(35)** in the base **(3)** in the mounted state; and
e) the segment **(22)** is fixed in the accommodating part **(A)** by means of a screw **(9)** inserted from the side of the first plate **(30)** through the axial passage **(35)** in the base and through the screw hole **(220)** in the segment **(22).**

5. Frame structure according to at least one of Claims 1 to 4, **characterized in that**
a) the upper side of the first plate **(30)** of the base **(3)** has the form of a toothed ring **(33),** whereby the first holes **(32)** in the upper side of the first plate **(30)** are in each case surrounded by a recess **(31)** which opens towards the outer circumference of the first plate **(30);**
b) the support **(4)** has at its ends a pair of tongues **(42),** which are intended for fitting on in each case one of the two plates **(30,37);** and
c) the bracket **(5)** is provided in the form of a V with two struts **(51,56)** which are combined to form a connecting point **(50)** that can be fastened to the table top underside **(12)** whereas the free ends of the struts **(51,56)** in each case have a tongue **(52)** which, when positioned one above the other, is intended in each case for fitting on one of the two plates **(30,37).**

6. Frame structure according to at least one of Claims 1 to 5, **characterized in that**
a) the recess **(31)** opens towards the outer circumference of the first plate **(30)** in a manner widened in the form of a funnel;
b) the radial tooth segments of the toothed ring **(33)** separate adjacent recesses **(31)** from one another, said adjacent recesses **(31)** being rounded towards the centre of the base **(3);** and
c) the relationship between the geometry of the recesses **(31)** in the base **(3)** and the tongues **(42,52)** on the support **(4)** and on the bracket **(5)** allows a horizontal pivoting range **(s)** for each support **(4)** and bracket **(5)** fitted on the base **(3),** said pivoting range **(s)** being limited by the borders of the recesses **(31).**

7. Frame structure according to at least one of Claims 1 to 6, **characterized in that**
a) in each case 16 first and second holes **(32,38)** are provided in the first and second plates **(30,37)** of the base **(3),** said holes **(32,38)** being offset in each case by 22.5° with respect to one another; and
b) the support **(4)** is a hollow quadrilateral profile having a grid of perforations **(40)** which can be used for cabling purposes under the table top **(1).**

## Revendications

1. Montage de structure d'une table, avec:
a) un plateau de table **(1)** supporté par des pieds **(2),** qui présente une face supérieure de plateau de table **(11)** comme face de travail et une face inférieure de plateau de table **(12);**
b) un support **(4)** fixé à la face inférieure de plateau de table **(12);** et
c) une base (3) disposée à chaque pied **(2)** en dessous du plateau de table **(1),** avec une partie de réception **(A),** sur laquelle le pied correspondant **(2)** est respectivement monté; dans lequel
d) la base **(3)** comporte des moyens de raccordement **(30,32;37,38)** permettant l'assemblage à plusieurs supports **(4)** présentant une orientation de départ différente au choix, **caractérisé en ce que**
e) les moyens de raccordement **(30,32;37,38)** à la base **(3)** sont utilisables en même temps pour l'assemblage à au moins une console **(5)** dans une orientation différente par rapport au support **(4),** en plus de l'assemblage à au moins un support **(4);**
f) la console (5) peut d'autre part être fixée à la face inférieure de plateau de table **(12);** et
g) des moyens de raccordement **(30,32;37,38)** à la base **(3)** inoccupés à ce stade sont utilisables pour la fixation à la face inférieure de plateau de table **(12).**

2. Montage de structure selon la revendication 1, **caractérisé en ce que** les moyens de raccordement **(30,32;37,38)** à la base **(3)** comprennent:
a) un premier plateau **(30)** et un deuxième plateau **(37)** disposé parallèlement à distance de celui-ci, qui sont reliés l'un à l'autre au moyen d'un noyau central **(36),** selon lequel la base **(3)** comprend un corps en forme de jante de roue;
b) dans le premier plateau **(30),** une multiplicité de premiers trous **(32)** disposés systématiquement en cercle, à l'extérieur du noyau **(36);** et
c) dans le deuxième plateau **(37),** une multiplicité de deuxièmes trous **(38)** disposés systématiquement en cercle, à l'extérieur du noyau **(36),** qui sont positionnés en correspondance avec les premiers trous **(32).**

3. Montage de structure selon au moins une des revendications 1 et 2, **caractérisé en ce que**
a) la partie de réception **(A)** pour l'assemblage à un pied **(2)** est formée par un creux central dans le deuxième plateau **(37),** qui est ouvert vers l'extérieur et qui atteint le noyau **(36)** vers l'intérieur; et
b) le pied **(2)** comporte à l'extrémité supérieure **(211)** de sa partie de jambe **(21)** un segment **(22)** fixé solidement à celle-ci, qui peut être introduit dans la partie de réception **(A).**

4. Montage de structure selon au moins une des revendications 1 à 3, **caractérisé en ce que**
a) la partie de réception **(A)** présente une géométrie essentiellement cylindrique et possède un contour de positionnement **(39);**
b) le segment **(22)** sur le pied **(2)** présente une géométrie essentiellement en forme de disque et possède un contour opposé complémentaire **(221)** destiné à coopérer avec le contour de positionnement **(39);**
c) un passage axial **(35)** s'étend à travers le noyau **(36)** de la base **(3);**
d) le segment **(22)** sur le pied **(2)** présente un trou de vis **(220)** qui, à l'état monté, est aligné avec le passage axial **(35)** de la base (3); et
e) le segment **(22)** est fixé dans la partie de réception (A) au **moyen** d'une vis **(9)** introduite par le côté du premier plateau **(30)** à travers le passage axial **(35)** de la base (3) et le trou de vis **(220)** dans le segment **(22).**

5. Montage de structure selon au moins une des revendications 1 à 4, **caractérisé en ce que**
a) la face supérieure du premier plateau **(30)** de la base **(3)** a la forme d'une couronne dentée **(33),** selon laquelle les premiers trous **(32)** sont respectivement entourés sur la face supérieure du premier plateau **(30)** par une gorge **(31),** qui s'ouvre vers le pourtour extérieur du premier plateau **(30);**
b) le support **(4)** présente à ses extrémités une paire de pattes **(42),** qui sont respectivement destinées à être agencées sur un des deux plateaux **(30,37);** et
c) la console **(5)** est réalisée en forme de V avec deux bras **(51,56),** qui se rejoignent en une jonction **(50),** qui peut être fixée à la face inférieure de plateau de table **(12),** tandis **que** les extrémités libres des bras **(51,56)** présentent respectivement une patte **(52),** qui est destinée à être agencée, en position superposée, respectivement sur un des deux plateaux **(30,37).**

6. Montage de structure selon au moins une des revendications 1 à 5, **caractérisé en ce que**
a) la gorge **(31)** s'ouvre en s'élargissant en forme d'entonnoir en direction du pourtour extérieur du premier plateau **(30);**
b) les segments de dent radiaux de la couronne dentée **(33)** séparent l'une de l'autre des gorges voisines **(31),** qui sont arrondies en direction du centre de la base **(3);** et
c) la relation entre la géométrie des gorges **(31)** sur la base **(3)** et les pattes **(42,52)** sur le support **(4)** et sur la console **(5),** permet une plage de pivotement horizontale **(s),** limitée par les bords des gorges **(31),** pour chaque support **(4)** et chaque console **(5)** agencés sur la base **(3).**

7. Montage de structure selon au moins une des revendications 1 à 6, **caractérisé en ce que**
a) il est prévu, dans le premier et le deuxième plateau **(30,37)** de la base **(3),** à chaque fois 16 premiers ou deuxièmes trous **(32,38),** respectivement espacés de 22.5°; et
b) le support **(4)** est un profilé carré creux présentant une grille de passages **(40),** qui peuvent être utilisés pour le câblage en dessous du plateau de table **(1).**
